# EUROPEAN PATENT APPLICATION

(11) **EP 4 550 689 A1**
(43) Date of publication of application: **07.05.2025**
(21) Application number: 24207374.0
(22) Date of filing: 18.10.2024
(51) Int. Cl.: H04B 7/185, H04W 76/28, H04W 52/02

(54) **ADAPTING RADIO MEASUREMENTS BASED ON A GLOBAL NAVIGATION SATELLITE SYSTEM MEASUREMENT GAP**

(30) Priority: 02.11.2023 US 202363595581 P
(71) Applicant: Nokia Technologies Oy, 02610 Espoo (FI)
(72) Inventor: MEDEIROS DE AMORIM, Rafhael, Aalborg (DK); LAURIDSEN, Mads, Gistrup (DK)
(74) Representative: Nokia EPO representatives

(57) **Abstract**

A method is provided that includes acquiring radio measurements associated with a non-terrestrial network (NTN) in a telecommunications system, during an evaluation period. The method includes performing a global navigation satellite system (GNSS) measurement to determine location information on which uplink transmissions to the NTN are based, the GNSS measurement associated with a GNSS measurement gap. The method includes performing a comparison of a duration of the GNSS measurement gap to a threshold duration. And the method includes performing an evaluation on the radio measurements based on the comparison.

## Description

### TECHNOLOGICAL FIELD

The present disclosure relates generally to telecommunications and, in particular, to adapting radio measurements in a non-terrestrial network (NTN) of a telecommunications system based on a global navigation satellite system measurement gap.

### BACKGROUND

A telecommunications system can be seen as a facility that enables communication sessions between two or more entities such as user terminals, base stations and/or other nodes by providing carriers between the various entities involved in the communications path. A telecommunications system can be provided for example by means of a communication network and one or more compatible communication devices. The communication sessions may comprise, for example, communication of data for carrying communications such as voice, video, electronic mail (email), text message, multimedia and/or content data and so on. Non-limiting examples of services provided comprise two-way or multi-way calls, data communication or multimedia services and access to a data network system, such as the Internet.

In a wireless telecommunications system at least a part of a communication session between at least two stations occurs over a wireless link. Examples of wireless systems comprise public land mobile networks (PLMN), satellite based communication systems and different wireless local networks, for example wireless local area networks (WLAN). Some wireless systems can be divided into cells, and are therefore often referred to as cellular systems.

A user can access the telecommunications system by means of an appropriate communication device or terminal. A communication device of a user may be referred to as user equipment (UE) or user device. A communication device is provided with an appropriate signal receiving and transmitting apparatus for enabling communications, for example enabling access to a communication network or communications directly with other users. The communication device may access a carrier provided by a station, for example a base station of a cell, and transmit and/or receive communications on the carrier.

The telecommunications system and associated devices typically operate in accordance with a given standard or specification which sets out what the various entities associated with the system are permitted to do and how that should be achieved. Communication protocols and/or parameters which shall be used for the connection are also typically defined. One example of a telecommunications system is the Universal Mobile Telecommunications System (UMTS). Other examples of telecommunications systems are Long-Term Evolution (LTE), LTE Advanced and the so-called 5G or New Radio (NR) networks. NR is being standardized by the 3rd Generation Partnership Project (3GPP).

### BRIEF SUMMARY

Example implementations of the present disclosure are generally directed to telecommunications and, in particular, to adapting radio measurements in a non-terrestrial network (NTN) of a telecommunications system based on a global navigation satellite system measurement gap. The present disclosure includes, without limitation, the following example implementations.

Some example implementations provide an apparatus comprising: at least one memory configured to store computer-readable program code; and at least one processing circuitry configured to access the at least one memory, and execute the computer-readable program code to cause the apparatus to at least: perform radio measurements associated with a non-terrestrial network (NTN), in an evaluation period associated with a configured discontinuous reception (DRX) cycle; perform a global navigation satellite system (GNSS) measurement, in a GNSS measurement gap in which none of the radio measurements are performed; perform a comparison of a duration of the GNSS measurement gap to a threshold duration; and estimate radio quality based on at least some of the radio measurements performed in the evaluation period, and based on the comparison.

Some example implementations provide a apparatus comprising: means for performing radio measurements associated with a non-terrestrial network (NTN), in an evaluation period associated with a configured discontinuous reception (DRX) cycle; means for performing a global navigation satellite system (GNSS) measurement, in a GNSS measurement gap in which none of the radio measurements are performed; means for performing a comparison of a duration of the GNSS measurement gap to a threshold duration; and means for estimating radio quality based on at least some of the radio measurements performed in the evaluation period, and based on the comparison.

Some example implementations provide a method comprising: performing radio measurements associated with a non-terrestrial network (NTN), in an evaluation period associated with a configured discontinuous reception (DRX) cycle; performing a global navigation satellite system (GNSS) measurement, in a GNSS measurement gap in which none of the radio measurements are performed; performing a comparison of a duration of the GNSS measurement gap to a threshold duration; and estimating radio quality based on at least some of the radio measurements performed in the evaluation period, and based on the comparison.

Some example implementations provide a computer-readable storage medium that is non-transitory and has computer-readable program code stored therein that, in response to execution by at least one processing circuitry, causes an apparatus to at least: perform radio measurements associated with a non-terrestrial network (NTN), in an evaluation period associated with a configured discontinuous reception (DRX) cycle; perform a global navigation satellite system (GNSS) measurement, in a GNSS measurement gap in which none of the radio measurements are performed; perform a comparison of a duration of the GNSS measurement gap to a threshold duration; and estimating radio quality based on at least some of the radio measurements performed in the evaluation period, and based on the comparison.

These and other features, aspects, and advantages of the present disclosure will be apparent from a reading of the following detailed description together with the accompanying figures, which are briefly described below. The present disclosure includes any combination of two, three, four or more features or elements set forth in this disclosure, regardless of whether such features or elements are expressly combined or otherwise recited in a specific example implementation described herein. This disclosure is intended to be read holistically such that any separable features or elements of the disclosure, in any of its aspects and example implementations, should be viewed as combinable unless the context of the disclosure clearly dictates otherwise.

It will therefore be appreciated that this Brief Summary is provided merely for purposes of summarizing some example implementations so as to provide a basic understanding of some aspects of the disclosure. Accordingly, it will be appreciated that the above described example implementations are merely examples and should not be construed to narrow the scope or spirit of the disclosure in any way. Other example implementations, aspects and advantages will become apparent from the following detailed description taken in conjunction with the accompanying figures which illustrate, by way of example, the principles of some described example implementations.

### BRIEF DESCRIPTION OF THE FIGURE(S)

Having thus described example implementations of the disclosure in general terms, reference will now be made to the accompanying figures, which are not necessarily drawn to scale, and wherein:
FIG. 1 illustrates a telecommunications system that includes one or more public land mobile networks (PLMNs) coupled to one or more external data networks, according to some example implementations of the present disclosure;
FIG. 2 illustrates a deployment of a PLMN, according to some example implementations;
FIG. 3 illustrates a deployment of a non-terrestrial networks (NTN) in the deployment of FIG. 2, according to some example implementations;
FIG. 4 is a flowchart illustrating various steps in a method of adapting radio measurements, according to some example implementations;
FIGS. 5A, 5B and 5C illustrate respective overlapping scenarios between a global navigation satellite system (GNSS) measurement gap (MG) and an on-duration of a discontinuous reception (DRX) cycle, according to some example implementations;
FIGS. 6A, 6B, 6C and 6D are flowcharts illustrating various steps in a method according to various example implementations; and
FIG. 7 illustrates an apparatus according to some example implementations.

### DETAILED DESCRIPTION

Some implementations of the present disclosure will now be described more fully hereinafter with reference to the accompanying figures, in which some, but not all implementations of the disclosure are shown. Indeed, various implementations of the disclosure may be embodied in many different forms and should not be construed as limited to the implementations set forth herein; rather, these example implementations are provided so that this disclosure will be thorough and complete, and will fully convey the scope of the disclosure to those skilled in the art. Like reference numerals refer to like elements throughout.

Unless specified otherwise or clear from context, references to first, second or the like should not be construed to imply a particular order. A feature described as being above another feature (unless specified otherwise or clear from context) may instead be below, and vice versa; and similarly, features described as being to the left of another feature else may instead be to the right, and vice versa. Also, while reference may be made herein to quantitative measures, values, geometric relationships or the like, unless otherwise stated, any one or more if not all of these may be absolute or approximate to account for acceptable variations that may occur, such as those due to engineering tolerances or the like.

As used herein, unless specified otherwise or clear from context, the "or" of a set of operands is the "inclusive or" and thereby true if and only if one or more of the operands is true, as opposed to the "exclusive or" which is false when all of the operands are true. Thus, for example, "[A] or [B]" is true if [A] is true, or if [B] is true, or if both [A] and [B] are true. Further, the articles "a" and "an" mean "one or more," unless specified otherwise or clear from context to be directed to a singular form. Furthermore, it should be understood that unless otherwise specified, the terms "data," "content," "digital content," "information," and similar terms may be at times used interchangeably. The term "network" may refer to a group of interconnected computers including clients and servers; and within a network, these computers may be interconnected directly or indirectly by various means including via one or more switches, routers, gateways, access points or the like.

Reference may be made herein to terms specific to a particular system, architecture or the like, but it should be understood that example implementations of the present disclosure may be equally applicable to any of a number of systems, architectures and the like. For example, reference may be made to 3GPP technologies such as Global System for Mobile Communications (GSM), UMTS, LTE, Narrowband Internet of Things (NB-IoT), enhanced Machine Type Communication (eMTC), LTE Advanced, 5G NR, 5G Advanced and 6G; however, it should be understood that example implementations of the present disclosure may be equally applicable to non-3GPP technologies such as IEEE 802, Bluetooth and Bluetooth Low Energy.

Further, as used in this application, the term "circuitry" may refer to one or more or all of the following: (a) hardware-only circuit implementations (such as implementations in only analog and/or digital circuitry); (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); or (c) hardware circuit(s) and/or processor(s), such as a microprocessor(s) or a portion of a microprocessor(s), that requires software (e.g., firmware) for operation, but the software may not be present when it is not needed for operation.

The above definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

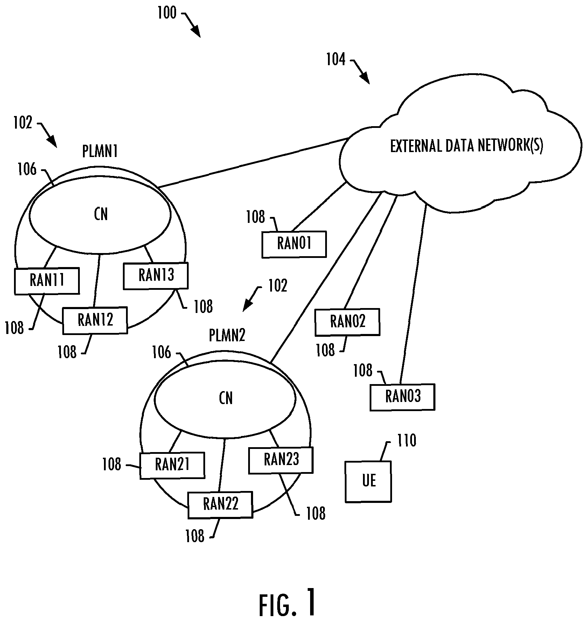

FIG. 1 illustrates a telecommunications system **100** according to various example implementations of the present disclosure. The telecommunications system generally includes one or more telecommunications networks. As shown, for example, the system includes one or more public land mobile networks (PLMNs) **102** coupled to one or more other external data networks **104** - notably including a wide area network (WAN) such as the Internet. Each of the PLMNs includes a core network (CN) **106** backbone such as the Evolved Packet Core (EPC) of LTE, the 5G core network (5GC) or the like; and each of the core networks and the Internet are coupled to one or more radio access networks (RANs) **108,** air interfaces or the like that implement one or more radio access technologies (RATs). As used herein, a "network device" refers to any suitable device at a network side of a telecommunications network. Examples of suitable network devices are described in greater detail below.

In addition, the system includes one or more radio units that may be varyingly known as user equipment (UE) **110,** terminal device, terminal equipment, mobile station or the like. The UE is generally a device configured to communicate with a network device or a further UE in a telecommunication network. The UE may be a portable computer (e.g., laptop, notebook, tablet computer), mobile phone (e.g., cell phone, smartphone), wearable computer (e.g., smartwatch), or the like. In other examples, the UE may be an Internet of things (IoT) device, an industrial IoT (IioT device), a vehicle equipped with a vehicle-to-everything (V2X) communication technology, or the like. In operation, these Ues may be configured to connect to one or more of the RANs **108** according to their particular radio access technologies to thereby access a particular CN **106** of a PLMN **102,** or to access one or more of the external data networks **104** (e.g., the Internet). The external data network may be configured to provide Internet access, operator services, 3rd party services, etc. For example, the International Telecommunication Union (ITU) has classified 5G mobile network services into three categories: enhanced mobile broadband (eMBB), ultra-reliable and low-latency communications (URLLC), and massive machine type communications (mMTC) or massive internet of things (MioT).

Examples of radio access technologies include 3GPP radio access technologies such as GSM, UMTS, LTE, LTE Advanced, NB-IoT, eMTC, 5G NR, 5G Advanced, and 6G. Other examples of radio access technologies include IEEE 802 technologies such as IEEE 802.11 (Wi-Fi), IEEE 802.15 (including 802.15.1 (WPAN/Bluetooth), 802.15.4 (Zigbee) and 802.15.6 (WBAN)), Bluetooth, Bluetooth Low Energy (BLE), ultra wideband (UWB), and the like. Generally, a radio access technology may refer to any 2G, 3G, 4G, 5G, 6G or higher generation mobile communication technology and their different versions, as well as to any other wireless radio access technology that may be arranged to interwork with such a mobile communication technology to provide access to the CN **106** of a mobile network operator (MNO).

In various example, a RAN **108** may be configured as one or more macrocells, microcells, picocells, femtocells or the like. The RAN may generally include one or more radio access nodes that are configured to interact with UEs **110.** In various examples, a radio access node may be referred to as a base station (BS), access point (AP), base transceiver station (BTS), Node B (NB), evolved NB (eNB), macro BS, NB (MNB) or eNB (MeNB), home BS, NB (HNB) or eNB (HeNB), next generation NB (gNB), enhanced gNB (en-gNB), next generation eNB (ng-eNB), or the like. Some type of network controlling/governing entity responsible for control of the radio access nodes. The network controlling/governing entity and radio access node may be separate or integrated into a single apparatus. The network controlling/governing entity may include processing circuity configured to carry out various management functions, etc. The processing circuity may be associated with a computer-readable storage medium or database for maintaining information required in the management functions.

A RAN **108** may be centralized or distributed. In various examples, components of a RAN may be interconnected by Ethernet, Gigabit Ethernet, Asynchronous Transfer Mode (ATM), optical fiber, dark fiber, passive wavelength division multiplexing (WDM), WDM passive optical network (WDM-PON), optical transport network (OTN), time sensitive networking (TSN) and/or any other data link layer network, possibly including radio links. The RAN may be connected to a CN **106** through one or more gateways, network functions or the like.

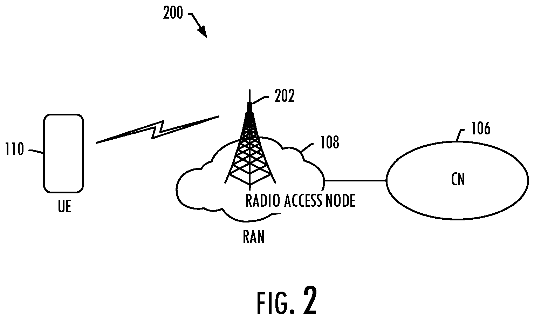

As will be appreciated, a PLMN **102** may be deployed in a number of different manners. FIG. 2 illustrates a deployment **200** of a PLMN, such as a 4G LTE or 5G deployment, according to some example implementations. As shown, the deployment includes a CN **106,** and RAN **108** with one or more radio access nodes **202** configured to interact with UEs **110.** In a 4G LTE deployment, the EPC is the CN, and the evolved UMTS terrestrial radio access network (E-UTRAN) is the RAN; and the E-UTRAN includes one or more eNBs (radio access nodes) configured connect UEs to the E-UTRAN to thereby access the EPC. Similarly, in a 5G deployment, the 5GC is the CN **106,** and the next generation (NG) radio access network (NG-RAN) is the RAN **108;** and the NG-RAN includes one or more gNBs (radio access nodes **202)** configured connect UEs **110** to the NG-RAN to thereby access the 5GC. The term 'gNB' in 5G may correspond to the eNB in 4G LTE.

Some deployments of 4G LTE and 5G in particular are considered standalone (SA) deployments. Other deployments combine 4G LTE and 5G technologies, and are referred to as non-standalone (NSA) deployments. In some deployments, the E-UTRAN includes one or more ng-eNBs that are configured to communicate with the 5GC, and that may also be configured to communicate with one or more gNBs. Similarly, in another deployment, the NG-RAN may include one or more en-gNBs that are configured to communicate with the EPC, and that may also be configured to communicate with one or more eNBs. In various instances, a single UE **110,** a dual-mode or multimode UE, may support multiple (two or more) RANs-thereby being configured to connect to multiple RANs, such as 4G LTE and 5G.

In some deployments, operations of a radio access node **202** may be distributed or functionally split into components including one or more remote radio head (RRHs) or radio units (RUs), and a baseband unit (BBU); and in some architectures, the BBU may be split into a distributed unit (DU) and a central/centralized unit (CU), such as a server, host or node. In some architectures, the RRH/RU and DU may be collocated. It is also possible that node operations may be distributed among a plurality of servers, hosts or nodes.

It should also be understood that the distribution of work between CN **106** operations and radio access node **202** operations may vary depending on implementation. Thus, a 5G network architecture may be based on a so-called CU-DU split. One gNB-CU (central node) may control one or more gNB-DUs. The gNB-CU may control a plurality of spatially separated gNB-DUs, acting at least as transmit/receive (Tx/Rx) nodes. In some example implementations, however, the gNB-DUs (also called DU) may include, for example, a radio link control (RLC), medium access control (MAC) layer and a physical (PHY) layer, whereas the gNB-CU (also called a CU) may include the layers above the RLC layer, such as a packet data convergence protocol (PDCP) layer, a radio resource control (RRC), and an internet protocol (IP) layer. Other functional splits are also possible. It is considered that skilled person is familiar with the OSI model and the functionalities within each layer.

In some example implementations, the server or CU may generate a virtual network through which the server communicates with the radio node. In general, virtual networking may involve a process of combining hardware and software network resources and network functionality into a single, software-based administrative entity, a virtual network. Such virtual network may provide flexible distribution of operations between the server and the radio head/node. In practice, any digital signal processing task may be performed in either the CU or the DU, and the boundary where the responsibility is shifted between the CU and the DU may be selected according to implementation.

Various networks are now starting to support non-terrestrial networks (NTNs), such as for IoT over NTN and NR over NTN. In an NTN system, a radio access node **202** (e.g., eNB, gNB) or radio access node functionality may be deployed onboard satellites or other aerospace platforms in a regenerative deployment (or architecture), or relayed by radio access nodes in a transparent deployment. The NTN may therefore provide communication coverage over a very large area that may be otherwise unreachable by a terrestrial radio access network alone. Such functionality can be used to globally connect IoT devices, as well as provide personal communication in remote areas and in disaster relief.

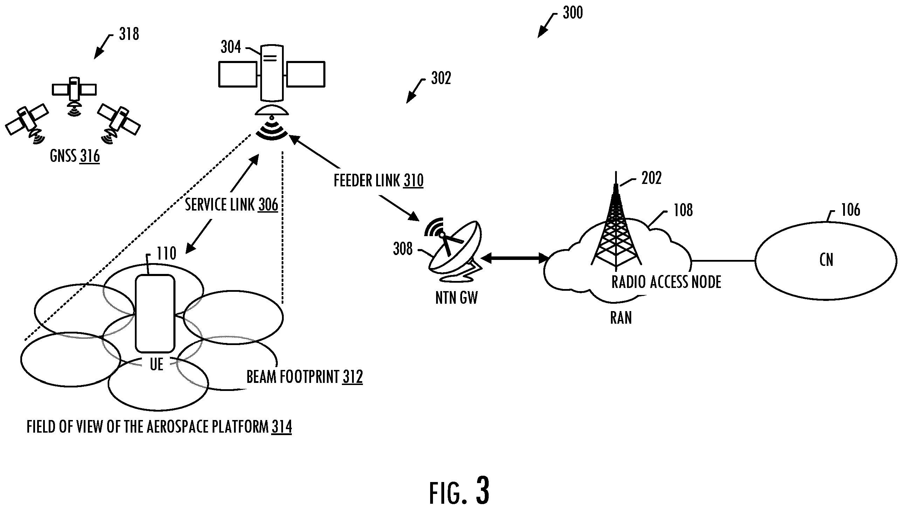

FIG. 3 illustrates a deployment **300** of an NTN **302** in the deployment **200** of FIG. 2, according to some example implementations. As shown, the NTN may include an aerospace platform, such as a satellite **304,** connected to a UE **110** by a service link **306** (radio link), and connected to an NTN gateway **308** by a feeder link **310** (radio link). The NTN gateway, then, may be connected to the radio access node **202.** In some examples, the NTN gateway and the radio access node may be co-located.

In various examples, the aerospace platform may be a spaceborne or airborne platform, vehicle or the like. As indicated, the aerospace platform may be a satellite **304.** In other more specific examples, the aerospace platform may be a low-earth orbit (LEO) satellite, medium-earth orbit (MEO) satellite, geostationary earth orbit (GEO) satellite, or the like. Likewise, in more specific examples, the aerospace platform may be an unmanned aircraft system (UAS), such as a tethered UAS (TUA), lighter than air UAS (LTA), heavier than air UAS (HTA), high altitude platforms (HAP), or the like. Some example implementations of the present disclosure may be described in the context of a satellite or UAS, but it should be understood that those example implementations are equally applicable to other aerospace platforms.

In particular examples in which aerospace platform is a satellite **304** of the NTN **302** in a transparent deployment, the satellite may implement a payload that is transparent. That is, the satellite may implement radio frequency (RF) filtering, conversion and amplification. Hence, the waveform signal repeated by the payload may be unchanged. The satellite may generate radio coverage beams with respective footprints **312** over a given service area bounded by its field of view **314** and onboard antenna technology. The respective footprints of the radio beams are typically of elliptic shape. The field of view of the satellite may depend on an onboard antenna diagram and/or minimum elevation angle. One radio beam may carry the signals of a cell, and several satellite radio beams may carry the signals of a single cell or multiple cells.

In some deployments, UEs **110** supporting the NTN **302** are assumed to have global navigation satellite system (GNSS) capability. A UE may be configured to perform a GNSS measurement (position fix) with a GNSS **316** including a constellation of satellites **318** to determine location information for itself (UE location information). The UE may then base uplink transmissions to the NTN on the location information.

More particularly, for example, the UE **110** may be configured to perform pre-compensation of uplink transmissions in terms of time and frequency adjustments based on the UE location information (acquired via the GNSS **316).** This pre-compensation may be useful when the NTN operates over LEO satellites that move about 28,000 km/h relative to the Earth. The pre-compensation may be based on the UE location information, and the UE being aware of location information for a satellite **304** of the NTN **302** (e.g., acquired via satellite assistance information broadcast in a system information block). And by calculating a distance between the UE and the satellite and how the distance will change during a transmission, the UE can determine when to perform an uplink transmission to the NTN.

In some deployments, it may be assumed that the UE 110 is unable to communicate with the NTN **302** and simultaneously acquire GNSS measurements from the GNSS **316.** Some discussions have included the UE moving to an RRC idle mode when the UE has to perform a GNSS measurement, but moving to RRC idle creates overhead in terms of connection setup signaling if the UE is non-stationary and has a long connection and is non-stationary. That is, the UE may need to move to RRC Idle to measure GNSS multiple times.

A GNSS measurement may be valid for a duration of time, which the UE **110** may report to the radio access node **202,** such as to make the radio access node aware of when a new GNSS measurement may be needed. Recent discussions have also included the radio access node **202** being configured to trigger the UE **110** to perform a GNSS measurement during a GNSS measurement gap, such as when a current GNSS validity duration is about to expire. Similarly, the UE may be configured to autonomously trigger the GNSS measurement during a measurement timer, if the UE is not otherwise triggered by the radio access node before the expiry of the GNSS validity duration.

In the above context, a GNSS measurement gap triggered by the radio access node and the measurement timer of the UE may both relate to a duration of time in which the UE is triggered or otherwise configured to perform a GNSS measurement to determine location information for itself. In this regard, the duration of the GNSS measurement gap or measurement timer may be based on a GNSS position fix time duration reported by the UE. As described, either of the duration of the GNSS measurement gap or UE measurement timer may be generally referred to as a GNSS measurement gap (MG), GNSS-MG. The GNSS-MG may also correspond to the actual time the UE spent on the GNSS measurement in the scenario where the UE finishes the measurement faster than the reported GNSS position fix time duration / the configured GNSS-MG. In some examples, the duration of the GNSS measurement may correspond to a scaled version of the GNSS-MG where the scaling factor is configured by the network or defined by specification.

A problem may arise when the GNSS-MG is confronted with UE procedures for radio measurements, such as for radio link monitoring (RLM) or radio resource measurement (RRM) activities. In the context of RLM, the UE may be configured to periodically perform radio measurements to monitor the quality of a serving cell. As a non-limiting example, consider the case of M1 type UE, in coverage enhancement mode A, i.e., an enhanced machine-type communication (eMTC) UE. The UE may be configured to evaluate the quality of the downlink radio link of a primary cell (PCell) relative to a threshold (Q_{out_CatM1}) over an evaluation period (T_{Evaluate_}Q_{out_CatM1}). The evaluation period may depend on whether the UE is configured for discontinuous reception (DRX) with a configured DRX cycle. In this regard, the DRX cycle link may range from less than 0.01 seconds up to 2.56 seconds, or up to 10.24 seconds for extended DRX (eDRX).

It may also be noteworthy that in some deployments, the UE 110 may consider a cell "unknown" if the cell has not been measured for more than a certain period of time (e.g., 5 seconds). This may mean that the UE cannot acquire downlink information from the cell without an extra acquisition time (or time to search the cell, T_{search}). In short, the UE may consider radio measurement samples older than this certain period of time as invalid and discards them.

A GNSS-MG that can range from 1 to 31 seconds may interfere with the capability of the UE **110** to perform radio measurements, such as to perform RLM to evaluate serving cell conditions. A similar problem may be how measurement delays in RRM (e.g., applicable to the identification and evaluation of neighbor cells) may be affected by a long GNSS-MG. Example implementations of the present disclosure therefore provide a solution that enables a UE configured with a GNSS-MG to more quickly perform an evaluation or radio measurements, such as for RLM or RRM. In the case of RLM in particular, this may avoid an unnecessary delay in the UE determining a drop in quality of a serving cell. The solution of some example implementations may also enable the UE to make the most use of radio measurements acquired before a GNSS-MG.

As explained in greater detail below, according to some example implementations of the present disclosure, a UE **110** may be configured to perform radio measurements associated with the NTN **302,** in an evaluation period associated with a configured DRX cycle. The configuerd DRX cyclemay be configured by the NTN or radio access node **202.** The UE may also be configured to perform a GNSS measurement, in a GNSS-MG. In some examples, the UE may be configured to perform the GNSS measurement in a GNSS-MG in which none of the radio measurements are performed.

The UE **110** may be configured to perform a comparison of a duration of the GNSS-MG to a threshold duration. This threshold duration may in some examples be associated with the DRX cycle that includes an on-duration in which the radio measurements are performed. Then, based on the comparison, the UE may be configured to estimate radio quality based on at least some of the radio measurements, and based on the comparison.

In some examples in which the comparison indicates the duration of the GNSS-MG is no greater than (less than, or less than or equal to) the threshold duration, the evaluation period may be maintained. In some of these examples, the UE **110** may be configured to estimate the radio quality based on the radio measurements performed before and after the GNSS-MG. In some further examples, the UE may be configured to extend the evaluation period based on at least one full or partial overlap of the GNSS-MG and an on-duration of the DRX cycle. The UE may then estimate the radio quality based on the radio measurements performed in the evaluation period as extended.

In some examples in which the comparison indicates the duration of the GNSS-MG is greater than the threshold duration, the UE **110** may be configuerd to discard one or more of the radio measurements that are performed before the GNSS-MG, and estimate the radio quality based on the radio measurements excluding the one or more of the radio measurements as discarded. That is, the radio quality may be estimated based only on radio measurement(s) acquired after the GNSS-MG. In some further examples, the UE may be configuerd to restart the evaluation period in which the radio measurements are acquired, with the evaluation period restarted after the GNSS-MG. The UE may then estimate the radio quality based on the radio measurements performed in the evaluation period as restarted. Here, the radio quality may be estimated only on radio measurement(s) acquired after the GNSS-MG.

In some examples in which the comparison indicates the duration of the GNSS measurement gap is greater than the threshold duration, the UE **110** may adjust the evaluation period to be associated with a shorter DRX cycle relative to the configutred DRX cycle, or a no DRX cycle configuration. In some further examples, the shorter DRX cycle may be shorter than the configured DRX cycle applied by the UE before the GNSS-MG.

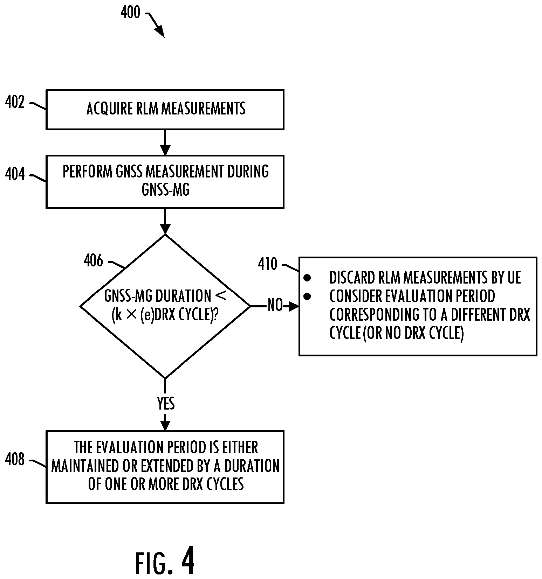

As indicated, some example implementations are based on one or more features that aim to efficiently handle the impact of the GNSS-MG on the UE's radio measurements (e.g. time required to measure or measurement requirements). FIG. 4 is a flowchart illustrating various steps in a method **400** of adapting RLM (radio) measurements that illustrates at least one of the feature(s), which may be implemented by a UE **110,** according to some example implementations. As shown at blocks **402** and **404,** the method includes acquiring RLM measurements during an evaluation period, and performing a GNSS measurement during a GNSS-MG.

As shown at block **406,** the method includes **400** includes comparing the duration of the GNSS-MG with a threshold duration associated with a DRX cycle (or eDRX cycle). In this regard, the threshold duration may be a configured DRX cycle or another value based on the configured DRX cycle, such as the configured DRX cycle with some added duration (e.g., duration *t* + e(DRX) cycle) or a scaled value of the configured DRX cycle (e.g., *k* × (e)DRX cycle). In some examples, the threshold duraion may be another threshold value (e.g., 5 second), or the comparison may be performed only when the (e)DRX cycle is above this other threshold value, or only when eDRX is configured. In other similar examples, the comparson may be performed only when the GNSS-MG is below a threshold value (e.g., 13 seconds). If the (e)DRX cycle or GNSS-MG does not satisfy the other threshold in these other examples, the UE may proceed to block **410.**

In some examples, the GNSS-MG considered in the comparison at block **406** may be from a configured value for the GNSS-MG or an early-terminated GNSS-MG. In this regard, an early-terminated GNSS-MG is a GNSS-MG in which the UE **110** performs the GNSS measurement in a duration less than the GNSS-MG, and signals its availability to the network (e.g., radio access node **202).** This may include, for example, the UE configured to transmit a random access preamble prior to the end of the GNSS- MG if the UE completes the GNSS measurement early.

Returning to FIG. 4, in some examples in which the GNSS-MG duration is no greater than the threshold duration, the UE **110** may proceed with the ongoing RLM measurements (including those acquired before the GNSS-MG), as shown at block **408.** The evaluation period may may also be maintained or extended by the duration of one or more DRX cycles. In this regard, the evaluation period may be extended based on a number of DRX cycles (or on-duations of a number of DRX cycles) at least partially overlapped by the GNSS-MG.

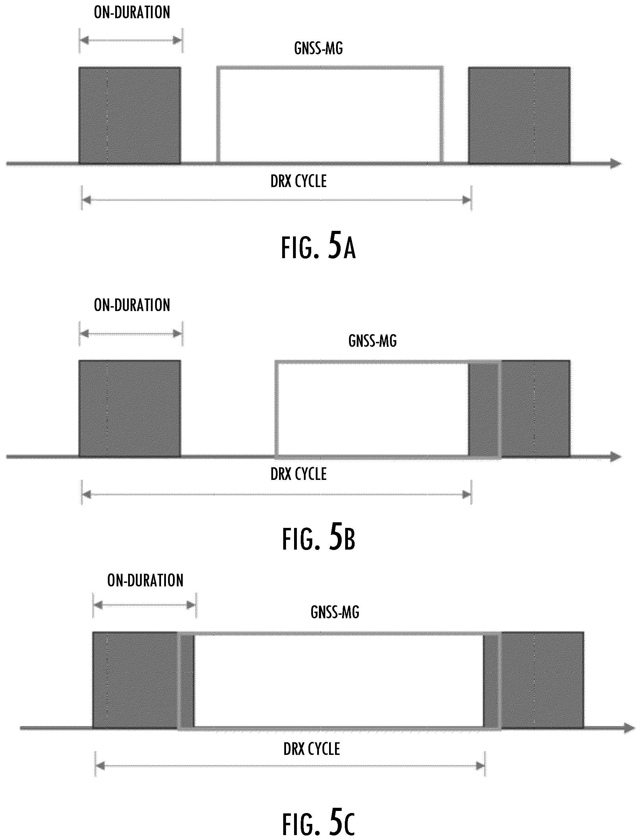

FIGS. 5A, 5B and 5C illustrate respective overlapping scenarios between a GNSS-MG and the on-duration of one or more DRX cycles, according to some example implementations. In FIG. 5A, there is no overlap between the GNSS-MG and the on-duration (sometimes referred to as an on-duration phase) of the DRX cycle, and the evaluation period may be maintained without extension. In FIG. 5B, the on-duration of one DRX cycle partially overlaps with the GNSS-MG, and the evaluation period may be extended for a duration of one DRX cycle. And in FIG. 5C in which the on-durations of two DRX cycles partially overlap with the GNSS-MG, the evaluation period may be extended for a duration of two DRX cycles. Even further, in some examples, the extension of the evaluation period may depend on whether the overlap is full or partial (e.g., extend by a factor of 0.5 for a partially overlap, where the factor may be configured by the network or defined in specification). In these scenarios, the on-duration of the DRX cycle is used as an example of when the UE may perform the radio measurement(s), but it shall be understood that the description is generally applicable to any type of duration/time in which the UE performs the radio measurement(s) when DRX is used.

Returning again to FIG. 4, in some examples in which the GNSS-MG duration is greater than the threshold duration, the UE may discard RLM measurements acquired before the GNSS-MG, and restart the evaluation period after the GNSS-MG, as shown at block **410.** Additionally or alternatively, the UE may consider an evaluation period corresponding to a shorter DRX cycle or for a "no DRX cycle" configuration. In some examples, the evaluation period may be restarted with a pre-defined value instead of a value corresponding to a DRX cycle.

In some examples, the UE **110** may be configured to compare the duration of the GNSS-MG with a second threshold duration (e.g., 5 seconds). In some of these examples, the UE may apply a scheduling restriction immediately after the GNSS-MG, when the duration of the GNSS-MG is greater than the second threshold. The scheduling restriction may indicate that some resources are unavailable to be allocated for transmission or to be monitored for reception at the UE, and that the UE is not required to perform transmission or monitor for reception in the restricted resources. The scheduling restriction may be of a duration that enables the UE to perform a cell search procedure for reacquisition of synchronization or for cell reacquisition of the serving cell that becomes unknown after the second threshold duration. In some examples, the evaluation period may be restarted at block **410** after an additional duration for the UE to perform the cell search procedure. But if the UE fails to complete the cell search procedure within a particular allowed duration, the UE may trigger an early radio link failure (or reestablishment) procedure.

Although described primarily in the context of RLM measurements, example implementations of the present disclosure are equally applicable to other radio measurements. As indicated above, the radio measurements in some examples may be RRM measurements, such as for measuring neighbor cells for mobility purposes. In this context, some example implementations may depend on a number of RRM measurement gaps or DRX cycles for RRM measurement fully or partially overlapping with the GNSS-MG. Additionally or alternatively, in some examples, an impacted requirement may also relate to a time to measure a known cell and a time to detect an unknown cell, on top of the time to evaluate a neighbor cell.

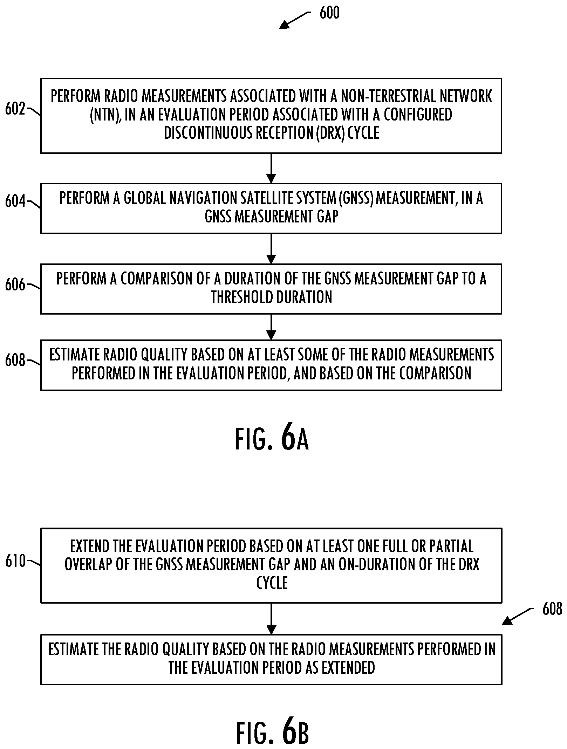

FIGS. 6A - 6D are flowcharts illustrating various steps in a method **600** that may be implemente by a UE **110,** according to various example implementations. The method includes performing radio measurements associated with a non-terrestrial network (NTN), in an evaluation period associated with a configured discontinuous reception (DRX) cycle, as shown at block **602** of FIG. 6A. The method includes performing a global navigation satellite system (GNSS) measurement, in a GNSS measurement gap, as shown at block **604.** The method includes performing a comparison of a duration of the GNSS measurement gap to a threshold duration, as shown at block **606.** And the method includes estimating radio quality based on at least some of the radio measurements performed in the evaluation period, and based on the comparison, as shown at block **608.**

In some examples, the threshold duration is associated with the configured DRX cycle that includes an on-duration in which the radio measurements are performed. In some examples, the treshold duration may be associated with a scaled version of the configured DRX cycle, where the scaling factor is configured by the network or defined by specification.

In some examples, the comparison indicates the duration of the GNSS measurement gap is no greater than the threshold duration, and the evaluation period is maintained.

In some examples, the method **600** further includes extending the evaluation period based on at least one full or partial overlap of the GNSS measurement gap and an on-duration of the DRX cycle, as shown at block **610** of FIG. 6B. In some of these examples, the radio quality is estimated at block **608** based on the radio measurements performed in the evaluation period as extended.

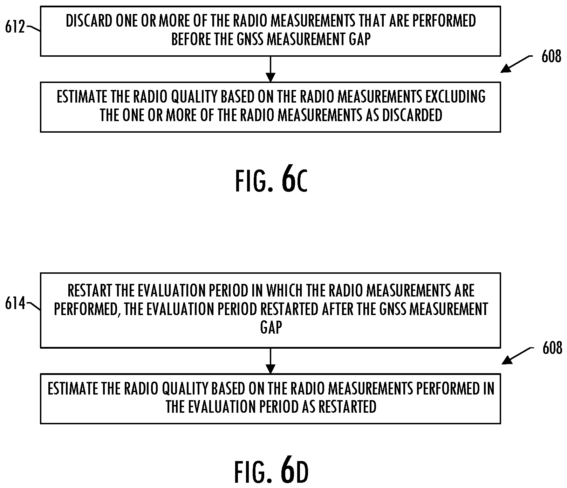

In some examples, the comparison indicates the duration of the GNSS measurement gap is greater than the threshold duration. In some of these examples, the method **600** further includes discarding one or more of the radio measurements that are performed before the GNSS measurement gap, as shown at block **612** of FIG. 6C. Also in some of these examples, the radio quality is estimated at block **608** based on the radio measurements excluding the one or more of the radio measurements as discarded.

In some examples, the method **600** further includes restarting the evaluation period in which the radio measurements are performed, the evaluation period restarted after the GNSS measurement gap, as shown at block **614** of FIG. 6D. In some of these examples, the radio quality is estimated at block **608** based on the radio measurements performed in the evaluation period as restarted.

In some examples, the comparison indicates the duration of the GNSS measurement gap is greater than the threshold duration, and the method **600** further comprises adjusting the evaluation period to be associated with a shorter DRX cycle relative to the configured DRX cycle, or a no DRX cycle configuration. The use of the shorter DRX cycle or the no DRX cycle configuration can be configured by the NTN or defined by specification.

According to example implementations of the present disclosure, a telecommunications system **100** or PLMN **102,** and its components such as a UE **110,** CN **106,** RAN **108,** radio access node **202,** satellite **304,** NTN gateway **308** and/or satellites **318,** may be implemented by various means. Means for implementing the system and its components may include hardware, firmware, software, or combinations thereof. In some examples, one or more apparatuses may be configured to function as or otherwise implement the system and its components shown and described herein. In examples involving more than one apparatus, the respective apparatuses may be connected to or otherwise in communication with one another in a number of different manners, such as directly or indirectly via a wired or wireless network or the like.

According to some example implementations, at least some of the method **400** described with respect to FIG. 4 may be carried out by an apparatus comprising means for performing functions corresponding steps of the method. Similarly, at least some of the method **600** described with respect to FIGS. 6A-6D may be carried out by an apparatus comprising means for performing functions corresponding steps of the method. Examples of a suitable apparatus may include a user equipment, user device, user terminal or the like.

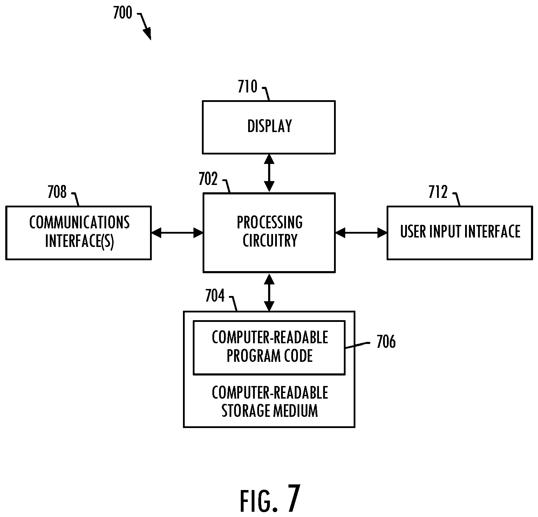

FIG. 7 illustrates an apparatus **700** in which means for performing various functions includes hardware, alone or under direction of one or more computer programs from a computer-readable storage medium, such as computer memory (or more simply "memory"), according to some example implementations of the present disclosure. Generally, an apparatus of example implementations of the present disclosure may comprise, include or be embodied in one or more fixed or portable electronic devices. Examples of suitable electronic devices include a wearable computer, mobile phone, portable computer, desktop computer, workstation computer, server (server computer) or the like. The apparatus may include one or more of each of a number of components such as, for example, processing circuitry **702** connected to computer-readable storage medium **704.**

The processing circuitry **702** may be composed of one or more processors alone or in combination with one or more computer-readable storage media. The processing circuitry is generally any piece of computer hardware that is capable of processing information such as, for example, data, computer programs and/or other suitable electronic information. The processing circuitry is composed of a collection of electronic circuits some of which may be packaged as an integrated circuit or multiple interconnected integrated circuits (an integrated circuit at times more commonly referred to as a "chip"). The processing circuitry may be configured to execute computer programs, which may be stored onboard the processing circuitry or otherwise stored in the computer-readable storage medium **704** (of the same or another apparatus).

The processing circuitry **702** may be a number of processors, a multi-core processor or some other type of processor, depending on the particular implementation. Further, the processing circuitry may be implemented using a number of heterogeneous processor systems in which a main processor is present with one or more secondary processors on a single chip. As another illustrative example, the processing circuitry may be a symmetric multi-processor system containing multiple processors of the same type. In yet another example, the processing circuitry may be embodied as or otherwise include one or more ASICs, FPGAs or the like. Thus, although the processing circuitry may be capable of executing a computer program to perform one or more functions, the processing circuitry of various examples may be capable of performing one or more functions without the aid of a computer program. In either instance, the processing circuitry may be appropriately programmed to perform functions or operations according to example implementations of the present disclosure.

The computer-readable storage medium **704** is generally any piece of computer hardware that is capable of storing information such as, for example, data, computer programs (e.g., computer-readable program code **706)** and/or other suitable information either on a temporary basis and/or a permanent basis. The computer-readable storage medium may include volatile and/or non-volatile memory, and may be fixed or removable. Examples of suitable memory include recording media, random access memory (RAM), read-only memory (ROM), a hard drive, a flash memory, a thumb drive, a removable computer diskette, an optical disk or some combination thereof.

The computer-readable storage medium **704** is a non-transitory device capable of storing information, and is distinguishable from a computer-readable transmission medium capable of carrying information from one location to another. Examples of suitable computer-readable transmission media comprise electronic carrier signals, telecommunications signals, software distribution packages, or some combination thereof. As used herein, the term "non-transitory" is a limitation of the medium itself (i.e., tangible, not a signal) as opposed to a limitation on data storage persistency (e.g., RAM versus ROM). A computer-readable medium as described herein generally refers to a computer-readable storage medium or computer-readable transmission medium. A computer-readable medium is any entity or device capable in which information, such as one or more computer programs or portions thereof, may be stored and carried.

In addition to the computer-readable storage medium **704,** the processing circuitry **702** may also be connected to one or more interfaces for displaying, transmitting and/or receiving information. The interfaces may include a communications interface **708** and/or one or more user interfaces. The communications interface may be configured to transmit and/or receive information, such as to and/or from other apparatus(es), network(s) or the like. The communications interface may be configured to transmit and/or receive information by physical (wired) and/or wireless communications links. Examples of suitable communication interfaces include a network interface controller (NIC), wireless NIC (WNIC) or the like.

The user interfaces may include a display **710** and/or one or more user input interfaces **712.** The display may be configured to present or otherwise display information to a user, suitable examples of which include a liquid crystal display (LCD), light-emitting diode (LED) display, organic LED (OLED) display, active-matrix OLED (AMOLED) or the like. The user input interfaces may be wired or wireless, and may be configured to receive information from a user into the apparatus, such as for processing, storage and/or display. Suitable examples of user input interfaces include a microphone, image or video capture device, keyboard or keypad, joystick, touch-sensitive surface (separate from or integrated into a touchscreen), biometric sensor or the like. The user interfaces may further include one or more interfaces for communicating with peripherals such as printers, scanners or the like.

Execution of the computer-readable program code **706** by the processing circuitry **702,** or storage of the computer-readable program code in the computer-readable storage medium **704,** supports combinations of operations for implementing example implementations of the present disclosure. In this manner, an apparatus **700** may comprise at least one processing circuitry and at least one computer-readable storage medium coupled to the at least one processing circuitry, where the at least one processing circuitry is configured to execute computer-readable program code stored in the at least one computer-readable storage medium. It will also be understood that one or more functions, and combinations of functions, may be implemented by special purpose hardware-based computer systems and/or processing circuitry which perform the specified functions, or combinations of special purpose hardware and program code instructions.

Some example implementations of the present disclosure may also be carried out in the form of a computer process defined by one or more computer programs or portions thereof. Example implementations of the present disclosure may be carried out by executing at least one portion of a computer program comprising computer-readable program code. The computer program may be in source code form, object code form, or in some intermediate form. The computer program may be stored in a computer-readable medium that is readable by a computer, processing circuitry or other suitable apparatus. As indicated above, for example, the computer program may be stored in a computer-readable storage medium. Additionally or alternatively, for example, the computer program may be stored in a computer-readable transmission medium. The coding of software for carrying out example implementations of the present disclosure is well within the scope of a person of ordinary skill in the art.

As will be appreciated, any suitable computer-readable program code may be loaded onto a computer, a processing circuitry or other programmable apparatus from a computer-readable medium (e.g., computer-readable storage medium, computer-readable transmission medium) to produce a particular machine, such that the particular machine becomes a means for implementing the functions specified herein. The computer-readable program code may also be stored in a computer-readable medium that can direct a computer, a processing circuitry or other programmable apparatus to function in a particular manner to thereby generate a particular machine or particular article of manufacture. In some examples, the computer-readable program code stored in the computer-readable medium may produce an article of manufacture, where the article of manufacture becomes a means for implementing functions described herein. The computer-readable program code may be retrieved from a computer-readable medium and loaded into a computer, processing circuitry or other programmable apparatus to configure the computer, processing circuitry or other programmable apparatus to execute operations to be performed on or by the computer, processing circuitry or other programmable apparatus.

Retrieval, loading and execution of computer-readable program code comprising program code instructions may be performed sequentially such that one instruction is retrieved, loaded and executed at a time. In some example implementations, retrieval, loading and/or execution may be performed in parallel such that multiple instructions are retrieved, loaded, and/or executed together. Execution of the program code instructions may produce a computer-implemented process such that the instructions executed by the computer, processing circuitry or other programmable apparatus provide operations for implementing functions described herein.

As explained above and reiterated below, the present disclosure includes, without limitation, the following example implementations.

Clause 1. An apparatus comprising: at least one memory configured to store computer-readable program code; and at least one processing circuitry configured to access the at least one memory, and execute the computer-readable program code to cause the apparatus to at least: perform radio measurements associated with a non-terrestrial network (NTN), in an evaluation period associated with a configured discontinuous reception (DRX) cycle; perform a global navigation satellite system (GNSS) measurement, in a GNSS measurement gap; perform a comparison of a duration of the GNSS measurement gap to a threshold duration; and estimate radio quality based on at least some of the radio measurements performed in the evaluation period, and based on the comparison.

Clause 2. The apparatus of clause 1, wherein the threshold duration is associated with the configured DRX cycle that includes an on-duration in which the radio measurements are performed.

Clause 3. The apparatus of clause 1 or clause 2, wherein the comparison indicates the duration of the GNSS measurement gap is no greater than the threshold duration, and the evaluation period is maintained.

Clause 4. The apparatus of clause 3, wherein the at least one processing circuitry is configured to execute the computer-readable program code to cause the apparatus to further extend the evaluation period based on at least one full or partial overlap of the GNSS measurement gap and an on-duration of the DRX cycle, and the radio quality is estimated based on the radio measurements performed in the evaluation period as extended.

Clause 5. The apparatus of any of clauses 1 to 4, wherein the comparison indicates the duration of the GNSS measurement gap is greater than the threshold duration, and wherein the at least one processing circuitry is configured to execute the computer-readable program code to cause the apparatus to further discard one or more of the radio measurements that are performed before the GNSS measurement gap, and the radio quality is estimated based on the radio measurements excluding the one or more of the radio measurements as discarded.

Clause 6. The apparatus of clause 5, wherein the at least one processing circuitry is configured to execute the computer-readable program code to cause the apparatus to further restart the evaluation period in which the radio measurements are performed, the evaluation period restarted after the GNSS measurement gap, and the radio quality is estimated on the radio measurements performed in the evaluation period as restarted.

Clause 7. The apparatus of any of clauses 1 to 6, wherein the comparison indicates the duration of the GNSS measurement gap is greater than the threshold duration, and wherein the at least one processing circuitry is configured to execute the computer-readable program code to cause the apparatus to adjust the evaluation period to be associated with a shorter DRX cycle relative to the configured DRX cycle, or a no DRX cycle configuration.

Clause 8. A apparatus comprising: means for performing radio measurements associated with a non-terrestrial network (NTN), in an evaluation period associated with a configured discontinuous reception (DRX) cycle; means for performing a global navigation satellite system (GNSS) measurement, in a GNSS measurement gap; means for performing a comparison of a duration of the GNSS measurement gap to a threshold duration; and means for estimating radio quality based on at least some of the radio measurements performed in the evaluation period, and based on the comparison.

Clause 9. The apparatus of clause 8, wherein the threshold duration is associated with the configured DRX cycle that includes an on-duration in which the radio measurements are performed.

Clause 10. The apparatus of clause 8 or clause 9, wherein the comparison indicates the duration of the GNSS measurement gap is no greater than the threshold duration, and the evaluation period is maintained.

Clause 11. The apparatus of clause 10, wherein the apparatus further comprises means for extending the evaluation period based on at least one full or partial overlap of the GNSS measurement gap and an on-duration of the DRX cycle, and the radio quality is estimated based on the radio measurements performed in the evaluation period as extended.

Clause 12. The apparatus of any of clauses 8 to 11, wherein the comparison indicates the duration of the GNSS measurement gap is greater than the threshold duration, and wherein the apparatus further comprises means for discarding one or more of the radio measurements that are performed before the GNSS measurement gap, and the radio quality is estimated based on the radio measurements excluding the one or more of the radio measurements as discarded.

Clause 13. The apparatus of clause 12, wherein the apparatus further comprises means for restarting the evaluation period in which the radio measurements are performed, the evaluation period restarted after the GNSS measurement gap, and the radio quality is estimated based on the radio measurements performed in the evaluation period as restarted.

Clause 14. The apparatus of any of clauses 8 to 13, wherein the comparison indicates the duration of the GNSS measurement gap is greater than the threshold duration, and the apparatus further comprises means for adjusting the evaluation period to be associated with a shorter DRX cycle relative to the configured DRX cycle, or a no DRX cycle configuration.

Clause 15. A method comprising: performing radio measurements associated with a non-terrestrial network (NTN), in an evaluation period associated with a configured discontinuous reception (DRX) cycle; performing a global navigation satellite system (GNSS) measurement, in a GNSS measurement gap; performing a comparison of a duration of the GNSS measurement gap to a threshold duration; and estimating radio quality based on at least some of the radio measurements performed in the evaluation period, and based on the comparison.

Clause 16. The method of clause 15, wherein the threshold duration is associated with the configured DRX cycle that includes an on-duration in which the radio measurements are performed.

Clause 17. The method of clause 15 or clause 16, wherein the comparison indicates the duration of the GNSS measurement gap is no greater than the threshold duration, and the evaluation period is maintained.

Clause 18. The method of clause 17, wherein the method further comprises extending the evaluation period based on at least one full or partial overlap of the GNSS measurement gap and an on-duration of the DRX cycle, and the radio quality is estimated based on the radio measurements performed in the evaluation period as extended.

Clause 19. The method of any of clauses 15 to 18, wherein the comparison indicates the duration of the GNSS measurement gap is greater than the threshold duration, and wherein the method further comprises discarding one or more of the radio measurements that are performed before the GNSS measurement gap, and the radio quality is estimated based on the radio measurements excluding the one or more of the radio measurements as discarded.

Clause 20. The method of clause 19, wherein the method further comprises restarting the evaluation period in which the radio measurements are performed, the evaluation period restarted after the GNSS measurement gap, and the radio quality is estimated based on the radio measurements performed in the evaluation period as restarted.

Clause 21. The method of any of clauses 15 to 20, wherein the comparison indicates the duration of the GNSS measurement gap is greater than the threshold duration, and the method further comprises adjusting the evaluation period to be associated with a shorter DRX cycle relative to the configured DRX cycle, or a no DRX cycle configuration.

Clause 22. A computer-readable storage medium that is non-transitory and has computer-readable program code stored therein that, in response to execution by at least one processing circuitry, causes an apparatus to at least: perform radio measurements associated with a non-terrestrial network (NTN), in an evaluation period associated with a configured discontinuous reception (DRX) cycle; perform a global navigation satellite system (GNSS) measurement, in a GNSS measurement gap; perform a comparison of a duration of the GNSS measurement gap to a threshold duration; and estimating radio quality based on at least some of the radio measurements performed in the evaluation period, and based on the comparison.

Clause 23. The computer-readable storage medium of clause 22, wherein the threshold duration is associated with the configured DRX cycle that includes an on-duration in which the radio measurements are performed.

Clause 24. The computer-readable storage medium of clause 22 or clause 23, wherein the comparison indicates the duration of the GNSS measurement gap is no greater than the threshold duration, and the evaluation period is maintained.

Clause 25. The computer-readable storage medium of clause 24, wherein the computer-readable storage medium has further computer-readable program code stored therein that, in response to execution by the at least one processing circuitry, causes the apparatus to further extend the evaluation period based on at least one full or partial overlap of the GNSS measurement gap and an on-duration of the DRX cycle, and the radio quality is estimated based on the radio measurements performed in the evaluation period as extended.

Clause 26. The computer-readable storage medium of any of clauses 22 to 25, wherein the comparison indicates the duration of the GNSS measurement gap is greater than the threshold duration, and wherein the computer-readable storage medium has further computer-readable program code stored therein that, in response to execution by the at least one processing circuitry, causes the apparatus to further discard one or more of the radio measurements that are performed before the GNSS measurement gap, and the radio quality is estimated based on the radio measurements excluding the one or more of the radio measurements as discarded.

Clause 27. The computer-readable storage medium of clause 26, wherein the computer-readable storage medium has further computer-readable program code stored therein that, in response to execution by the at least one processing circuitry, causes the apparatus to further restart the evaluation period in which the radio measurements are performed, the evaluation period restarted after the GNSS measurement gap, and the radio quality is estimated based on the radio measurements performed in the evaluation period as restarted.

Clause 28. The computer-readable storage medium of any of clauses 22 to 27, wherein the comparison indicates the duration of the GNSS measurement gap is greater than the threshold duration, and wherein the computer-readable storage medium has further computer-readable program code stored therein that, in response to execution by the at least one processing circuitry, causes the apparatus to further adjust the evaluation period to be associated with a shorter DRX cycle relative to the configured DRX cycle, or a no DRX cycle configuration.

Clause 29. An apparatus comprising means for performing the method of any of clauses 15 to 21.

Clause 30. A computer-readable medium comprising computer-readable program code that, in response to execution by at least one processing circuitry, causes an apparatus to perform the method of any of clauses 15 to 21.

Clause 31. A computer-readable storage medium comprising computer-readable program code that, in response to execution by at least one processing circuitry, causes an apparatus to perform the method of any of clauses 15 to 21.

Clause 32. A computer program comprising computer-readable program code that, in response to execution by at least one processing circuitry, causes an apparatus to perform the method of any of clauses 15 to 21.

Many modifications and other implementations of the disclosure set forth herein will come to mind to one skilled in the art to which the disclosure pertains having the benefit of the teachings presented in the foregoing description and the associated figures. Therefore, it is to be understood that the disclosure is not to be limited to the specific implementations disclosed and that modifications and other implementations are intended to be included within the scope of the appended claims. Moreover, although the foregoing description and the associated figures describe example implementations in the context of certain example combinations of elements and/or functions, it should be appreciated that different combinations of elements and/or functions may be provided by alternative implementations without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. An apparatus comprising:
at least one memory configured to store computer-readable program code; and
at least one processing circuitry configured to access the at least one memory, and execute the computer-readable program code to cause the apparatus to at least:
perform radio measurements associated with a non-terrestrial network (NTN), in an evaluation period associated with a configured discontinuous reception (DRX) cycle;
perform a global navigation satellite system (GNSS) measurement, in a GNSS measurement gap;
perform a comparison of a duration of the GNSS measurement gap to a threshold duration; and
estimate radio quality based on at least some of the radio measurements performed in the evaluation period, and based on the comparison.

2. The apparatus of claim 1, wherein the threshold duration is associated with the configured DRX cycle that includes an on-duration in which the radio measurements are performed.

3. The apparatus of claim 1, wherein the comparison indicates the duration of the GNSS measurement gap is no greater than the threshold duration, and the evaluation period is maintained.

4. The apparatus of claim 3, wherein the at least one processing circuitry is configured to execute the computer-readable program code to cause the apparatus to further extend the evaluation period based on at least one full or partial overlap of the GNSS measurement gap and an on-duration of the DRX cycle, and the radio quality is estimated based on the radio measurements performed in the evaluation period as extended.

5. The apparatus of claim 1, wherein the comparison indicates the duration of the GNSS measurement gap is greater than the threshold duration, and
wherein the at least one processing circuitry is configured to execute the computer-readable program code to cause the apparatus to further discard one or more of the radio measurements that are performed before the GNSS measurement gap, and the radio quality is estimated based on the radio measurements excluding the one or more of the radio measurements as discarded.

6. The apparatus of claim 5, wherein the at least one processing circuitry is configured to execute the computer-readable program code to cause the apparatus to further restart the evaluation period in which the radio measurements are performed, the evaluation period restarted after the GNSS measurement gap, and the radio quality is estimated on the radio measurements performed in the evaluation period as restarted.

7. The apparatus of claim 1, wherein the comparison indicates the duration of the GNSS measurement gap is greater than the threshold duration, and
wherein the at least one processing circuitry is configured to execute the computer-readable program code to cause the apparatus to adjust the evaluation period to be associated with a shorter DRX cycle relative to the configured DRX cycle, or a no DRX cycle configuration.

8. A method comprising:
performing radio measurements associated with a non-terrestrial network (NTN), in an evaluation period associated with a configured discontinuous reception (DRX) cycle;
performing a global navigation satellite system (GNSS) measurement, in a GNSS measurement gap;
performing a comparison of a duration of the GNSS measurement gap to a threshold duration; and
estimating radio quality based on at least some of the radio measurements performed in the evaluation period, and based on the comparison.

9. The method of claim 8, wherein the threshold duration is associated with the configured DRX cycle that includes an on-duration in which the radio measurements are performed.

10. The method of claim 8, wherein the comparison indicates the duration of the GNSS measurement gap is no greater than the threshold duration, and the evaluation period is maintained.

11. The method of claim 10, wherein the method further comprises extending the evaluation period based on at least one full or partial overlap of the GNSS measurement gap and an on-duration of the DRX cycle, and the radio quality is estimated based on the radio measurements performed in the evaluation period as extended.

12. The method of claim 8, wherein the comparison indicates the duration of the GNSS measurement gap is greater than the threshold duration, and
wherein the method further comprises discarding one or more of the radio measurements that are performed before the GNSS measurement gap, and the radio quality is estimated based on the radio measurements excluding the one or more of the radio measurements as discarded.

13. The method of claim 12, wherein the method further comprises restarting the evaluation period in which the radio measurements are performed, the evaluation period restarted after the GNSS measurement gap, and the radio quality is estimated based on the radio measurements performed in the evaluation period as restarted.

14. The method of claim 8, wherein the comparison indicates the duration of the GNSS measurement gap is greater than the threshold duration, and the method further comprises adjusting the evaluation period to be associated with a shorter DRX cycle relative to the configured DRX cycle, or a no DRX cycle configuration.

15. A computer program comprising instructions, which, when executed by an apparatus, cause the apparatus to:
perform radio measurements associated with a non-terrestrial network (NTN), in an evaluation period associated with a configured discontinuous reception (DRX) cycle;
perform a global navigation satellite system (GNSS) measurement, in a GNSS measurement gap;
perform a comparison of a duration of the GNSS measurement gap to a threshold duration; and
estimate radio quality based on at least some of the radio measurements performed in the evaluation period, and based on the comparison.
